# EUROPEAN PATENT APPLICATION

(11) **EP 1 795 822 A2**
(43) Date of publication of application: **13.06.2007**
(21) Application number: 06077201.9
(22) Date of filing: 08.12.2006
(51) Int. Cl.: F24F 11/00

(54) **Ventilation device**

(30) Priority: 09.12.2005 NL 1030630; 03.01.2006 NL 1030827
(71) Applicant: Brink Climate Systems B.V., 7951 DA Staphorst (NL)
(72) Inventor: Rooyendijk, Maria Marinus Theodorus Anthonius A., 8121 JH Olst (NL)
(74) Representative: Seerden, Adrianus Maria

(57) **Abstract**

The invention relates to a ventilation device for balanced ventilation of a building, such as a residence, divided into at least two zones each of which zone has at least one outlet or inlet, of which at least one is provided with flow through adjustment means, for instance a valve, wherein the ventilation device is further provided with a control device that is operationally connected to the flow through adjustment means, and requesting means, for instance a time switch or sensors operationally connected to the control device making a request to the control device for air in one of the zones, wherein the requesting means make a request to the control device for additional air in a zone, and the control device in response to the request activates one or more of the flow through adjustment means to adjust the ventilation flows in the zones in order to meet the request.

## Description

### BACKGROUND OF THE INVENTION

The invention relates to a ventilation device for balanced ventilation of at least two zones in a building, particularly a residence.

Such ventilation devices are known. In addition such a ventilation device actively brings nearly as much outside air into a building as it takes inside air from inside the building to the outside of the building. Such a ventilation device will for that purpose generally be equipped with an inlet that debouches outside the building, for sucking in outside air into the building, and an outlet for discharging nearly as much inside air from the building to the outside of the building, as well as a fan or the like for moving the air.

A problem with existing ventilation devices is that the demand for fresh air varies over time, and moreover depends on the number of persons present in the building and the degree of internal pollution sources (for instance Radon). Moreover the need may also vary per room or area in the building.

A solution to this problem is having a fan that has often been placed in such devices in order to move the air, operate faster. A drawback thereof is that as a result energy consumption and noise production increase, whereas the importance of proper ventilation increases due to increasing insulation of buildings in order to save energy, and the noise of the installation is considered rather annoying due to the insulation shell of the building being soundproof.

### SUMMARY OF THE INVENTION

It is an object of the invention to at least partially end the said drawbacks.

For that purpose the invention provides a ventilation device for balanced ventilation of a building, such as a residence, divided into at least two zones each of which zone has at least one outlet or inlet, of which at least one is provided with flow through adjustment means, for instance a valve, wherein the ventilation device is further provided with a control device that is operationally connected to the flow through adjustment means, and requesting means, for instance a time switch or sensors operationally connected to the control device for making a request to the control device for air in one of the zones, wherein the requesting means make a request to the control device for additional air in a zone, and the control device in response to the request activates one or more of the flow through adjustment means to adjust the ventilation flows in the zones in order to meet the request.

The invention furthermore provides a method for ventilating a building, particularly a residence, by means of a ventilation device for balanced ventilation, wherein the building is divided into at least two zones each of which zone has at least one outlet or inlet, of which at least one is provided with flow through adjustment means, for instance a valve, and the ventilation device is furthermore provided with a control device that is operationally connected to the flow through adjustment means, and requesting means, for instance a time switch or sensors, operationally connected to the control device for making a request to the control device for air in one of the zones, wherein the requesting means make a request to the control device for additional air in a zone, and the control device in response to the request activates one or more of the flow through adjustment means to adjust the ventilation flows in the zones in order to meet the request.

It has turned out that a certain basic ventilation flow rate in a building usually suffices to accommodate a fluctuation in the need for fresh air. On average it has namely turned out that a certain quantity of ventilation in a building is necessary. By dividing a building into zones and indicating per zone whether additional fresh air is needed at a certain moment or for a certain period of time, and moreover providing each zone with a means for changing, that means limiting or increasing, the flow rate of supplied and/or discharged air the additional demand for fresh air in one or more zones in the building can at least be partially accommodated.

By using said means to limit the ventilation in other zones, the capacity thus created, that means the flow rate that is not used in those zones, will be supplied to those zones in which a larger flow rate, that means a larger quantity of fresh air, is necessary. This proved that in many cases an adjustment of the overall flow rate of fresh air was not necessary.

In many cases the means to adjust the flow rate are valves in or near the inlets or outlets in the zones. Preferably such a means is present in each zone. When an outlet is present in each zone a valve may be arranged in every outlet. Additionally or alternatively an inlet may be present in each zone, and each inlet may be provided with a valve.

In one embodiment the ventilation device is provided with a heat exchanger for exchanging heat energy between the incoming outside air and the outflowing inside air. Such a ventilation device is capable of realising a very low energy consumption.

In one embodiment of the ventilation device according to the invention the requesting means comprise an adjustable time switch. A user may set a time therein at which additional fresh air is needed, and a zone in which said additional fresh air is needed. Optionally the quantity of additional fresh air needed may also be set. The time switch will give a request signal to a control device, which on the basis of the local need and the basic flow rate calculates how many and what means have to be adjusted in order to adjust the flow rate. If it turns out to be impossible to ensure the desired ventilation in this way, the overall flow rate may be additionally adjusted.

In another embodiment the requesting means comprise sensors for measuring the air quality in a zone. Such sensors may for instance be CO₂ sensors, air humidity sensors, Nox sensors or the like. Other types of sensors are presence sensors that for instance give a signal when a person is present in a room or zone. An advantage of such sensors is that the supply of fresh air can be even better adjusted to the actual need, as a result of which an even lower energy consumption can be realised. Optionally such sensors can be combined, and/or combined with a time switch as described above.

The ventilation device in fact ensures that the ventilation flows in the various zones in a building in some zones become smaller than a certain average, and in other zones becomes larger than said average, whereas the overall flow rate remains substantially the same. As a result it turned out to be possible to accommodate usual and foreseeable fluctuations in the need for fresh air.

The degree of ventilation particularly depends on the CO₂-content in the various rooms, as measured by the sensors in question. In this automated ventilation control the control device is able to adjust the degree of ventilation, also named the ventilation position, to the measured value. A ventilation having a zero value can be opted for, and ventilation positions 1, 2 and 3, that increase in degree. Whether or not to include the ventilation position 3 in the process may be opted for. Said option is created in connection with a noise level that might be too high. It is particularly advantageous when three control strategies can be chosen from.

Further embodiments of the ventilation device according to the invention have been described in the sub claims, which should be considered inserted here.

It will be clear that some aspects that have been described above and in the claims can be combined.

The invention in particular also relates to a switch, suitable and intended for a ventilation device as described above or suitable and intended for a method as described above.

### SHORT DESCRIPTION OF THE DRAWINGS

The invention will be further elucidated on the basis of an exemplary embodiment of a ventilation device according to the invention, in which:
Figure 0 shows a residence;
Figures 0A-0B show various floors of the residence of figure 0;
Figure 0D shows a schematic example of the flow rate distribution of a general ventilation device in the residence of figure 0;
Figures 1-6 show various schematic embodiments of the ventilation device according to the invention.

### DETAILED DESCRIPTION OF THE DRAWINGS

Figure 0 shows a side view of a residence 1 having floors 2, 3 and 4.

The figures 0A, 0B and 0C show said respective floors 2, 3 and 4 in top view. A ventilation device 5 including heat exchanger is positioned (in this case in one housing) at the attic floor 4 (figure OC). An outer inlet 6 and an outer outlet 7 for letting in outside air into the residence and letting out inside air out of the residence, respectively, extend through the roof to the outside.

In the ventilation device shown here two zones can be distinguished, that means zone 1 referred to by reference number 2 of the ground floor and zone 2, referred to by reference number 3, the floor with bedrooms. Supply and discharge channels for air, referred to by number 8 in figure 0C, run from the ventilation device 5.

Figure 0A shows a top view of the ground floor 2 of the residence, wherein inner outlets 40 ensure supply of fresh outside air and inner inlets 41 in the kitchen and toilet ensure exhaustion of the inside air. Both at 100 and 101 the top connection has a diameter of 125 mm. The flow rate at 41 in the toilet is 25 m³/hour, at 40 in the kitchen 57 m³/hour, at 41 in the kitchen 57 m³/hour, at 40 in the living room 66.8 m³/hour.

Figure 0B shows a top view of the first floor 3 with bedrooms and a bathroom 42. In this zone inner outlets 43 have been provided in each bedroom, and an inner inlet 44 for exhaustion of inside air in the bathroom. The air channels are referred to by 8 here as well. At 102 the top connection has a diameter of 150 mm and the bottom connection has a diameter of 125 mm. At 103 the diameter is 150 mm after branching off, bathroom, gradually changing to 125 mm. The flow rate at 43 (centre one in figure) is approximately 47.2 m³/hour, at 43 (bottom one in figure) 33.8 m³/hour, and at 43 (right one in figure) 25 m³/hour, whereas the room is 7.65 m². At 44 the flow rate is 50 m³/hour.

Figure OD systematically shows the distribution of the air flows, in case of an exemplary suction (H) of 100 m³ air per hour and an exhaustion (G) of also 100 m³ air per hour. Both floors 2 and 3 have been indicated. In said situation for instance 55 m³/hour (A) is discharged into the bedroom and 30 m³/hour (C) is exhausted in the bathroom. In addition 45 m³/hour (E) is discharged to the ground floor 2 and 15 m³/hour () is exhausted in the toilet and 55 m³/hour (F) in the kitchen. At (B) 25 m³/hour now flows. Said set standard flows will result in the indicated flow rates through the residence and from zone to zone. By according to the invention arranging valves in the various inner outlets and/or inner outlets, as well as a control device and requesting means, it turned out to be possible to influence the various flows in a manner that can be determined beforehand. As a result in many cases it turned out to be possible to realise a proper ventilation in case of a varying demand for fresh air, without for instance adjusting the number of revolutions of the fan.

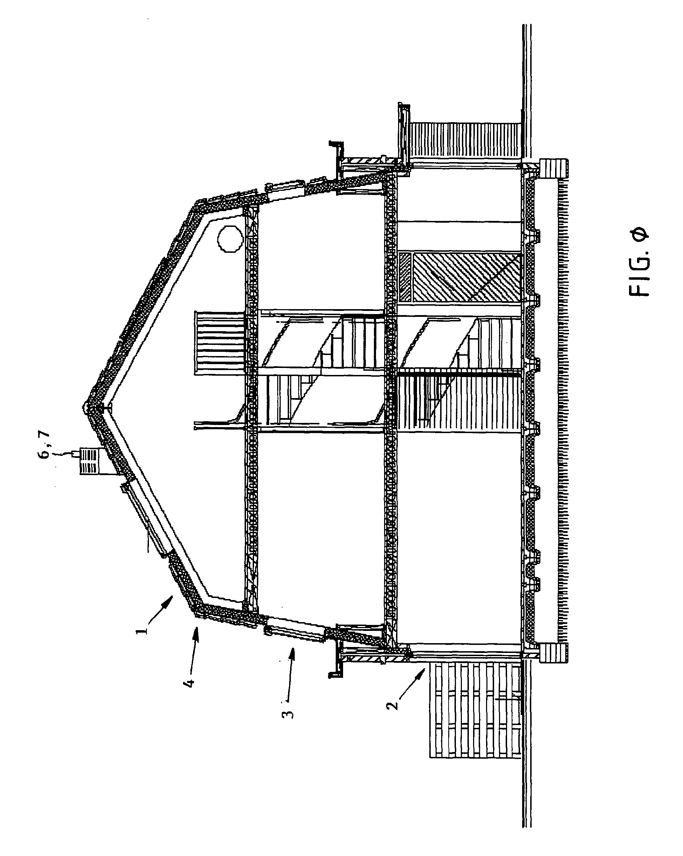

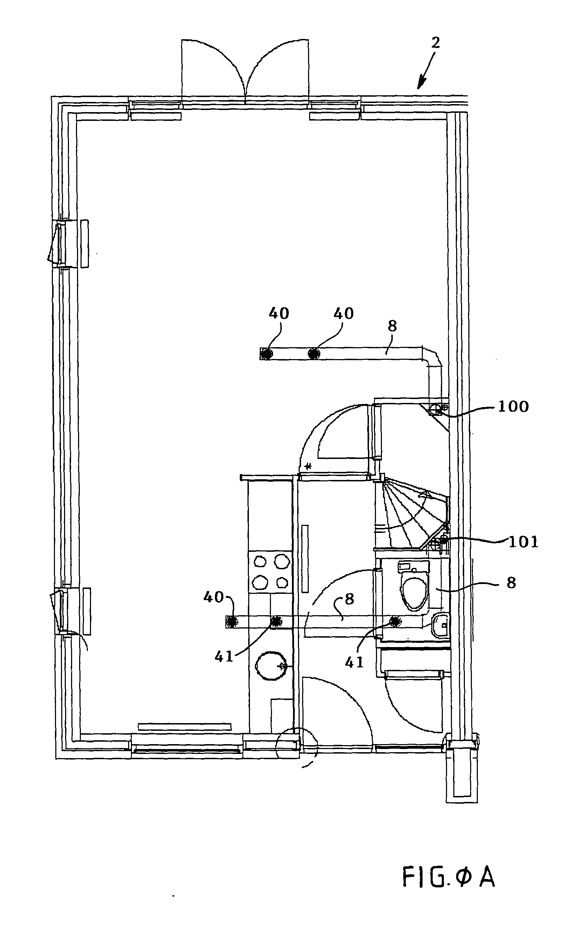

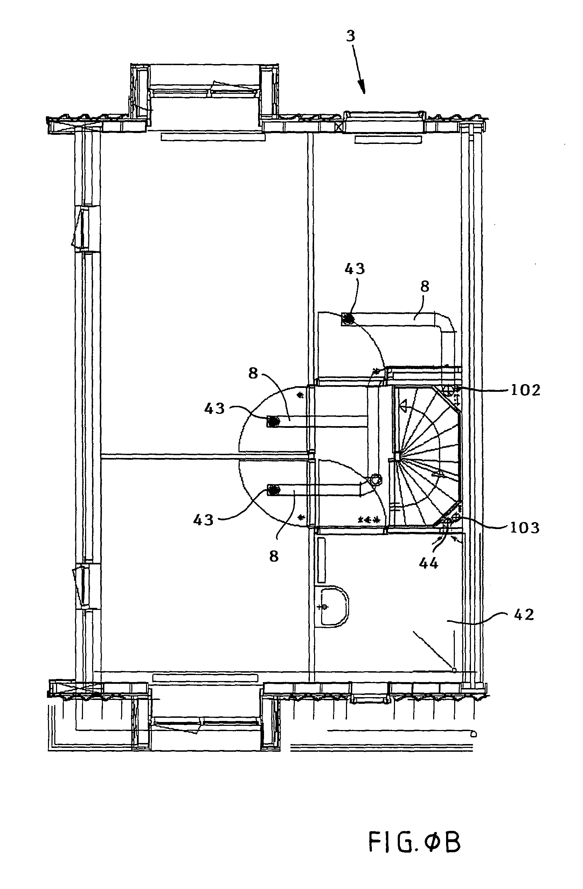

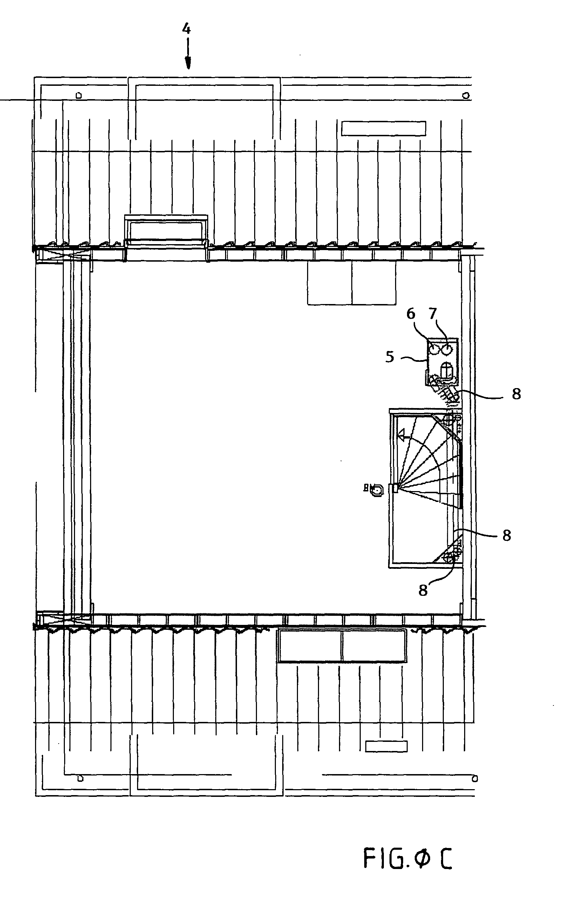

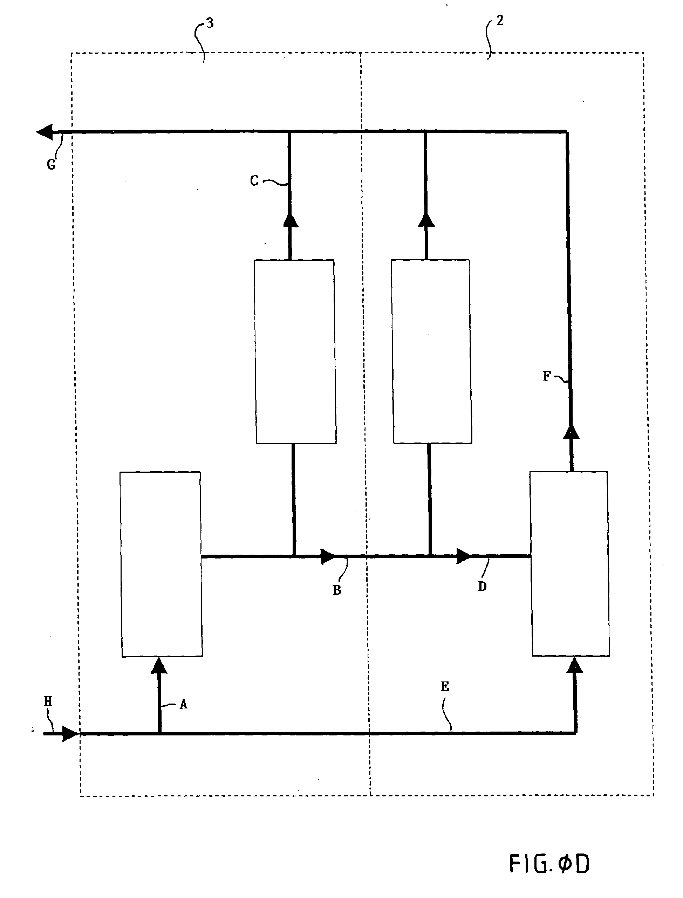

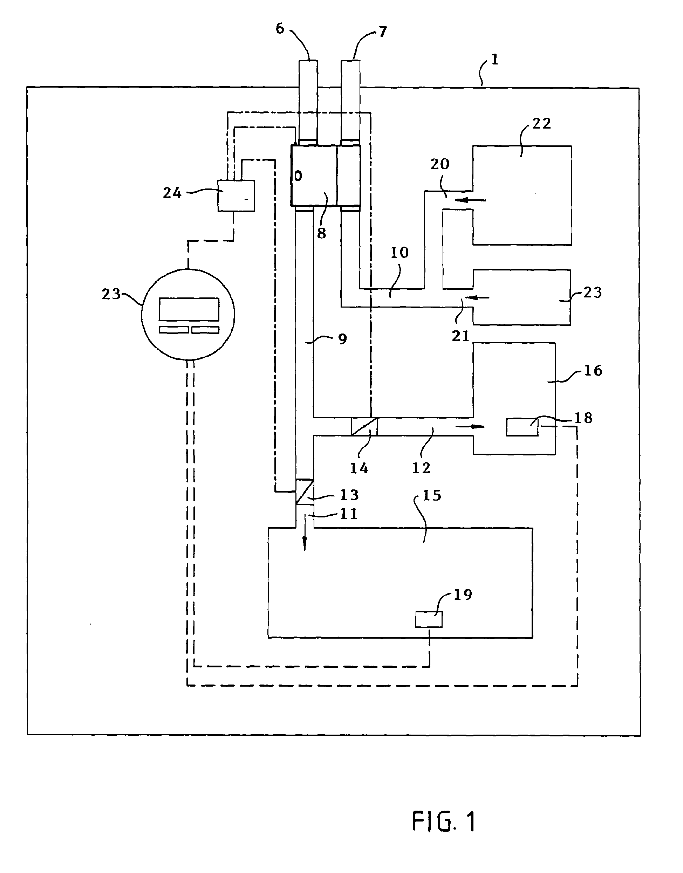

Figure 1 shows a building 1 provided with a ventilation device according to the invention having an outer inlet 6 and an outer inlet 7, connected to an air displacement device (usually a fan) and heat exchanger 8, shown here in one housing.

The outer inlet 6 is furthermore in connection with inner outlet 9 and the outer outlet 7 is connection with inner inlet 10. The inner inlet or inside air channel 9 branches into two inner outlets 11 and 12 which each debouch in another zone or room in the building. Inner outlet 11 is provided with valve 13 and inner outlet 12 with valve 14. The ventilation device is furthermore provided with an inner inlet 20 and inner inlet 21 which debouch in room (zone) 22 and room (zone) 23, respectively.

Room or zone 6 has furthermore been provided with in this case a CO₂ sensor 18 and room or zone 15 has been provided with a CO₂ sensor 19. The ventilation device has furthermore been provided with a requesting means 23 that receives a signal from the CO₂ sensors 18 and 19. Moreover the requesting means has been provided with a programmable timer in which for each room one or more time slots can be given to a timer in which slots more or less fresh air is needed in the rooms 15 and 16. This requesting means gives a signal to the control unit 24 which control unit operates the valves, indicated by a stripe-dotted line as an operational connection to the valves, and which is capable of, if so desired, adjust the ventilation speed.

In figure 1 there is question of rooms/zones 15, 16, 23 and 22. This may be actual rooms, such as chambers, but also zones, such as entire floors. These rooms or floors are not closed from one another in a flow proof manner. As a result flows run from one room/zone to the other. In a stationary situation a flow may for instance arise as shown in figure OD. By changing a flow rate by more or less closing a valve 13, 14 the flow pattern/ventilation pattern can be adjusted. The setting will in some case take place by experiment, depending on the building and the fluctuations in demand for ventilation/fresh air.

The mutual connections of the valves, the requesting means 23, the control device 24 and the fan in unit 8 have been indicated by dotted lines. Said lines may be physical lines, but also wireless connections, by means of infrared, radio connection, bluetooth and the like.

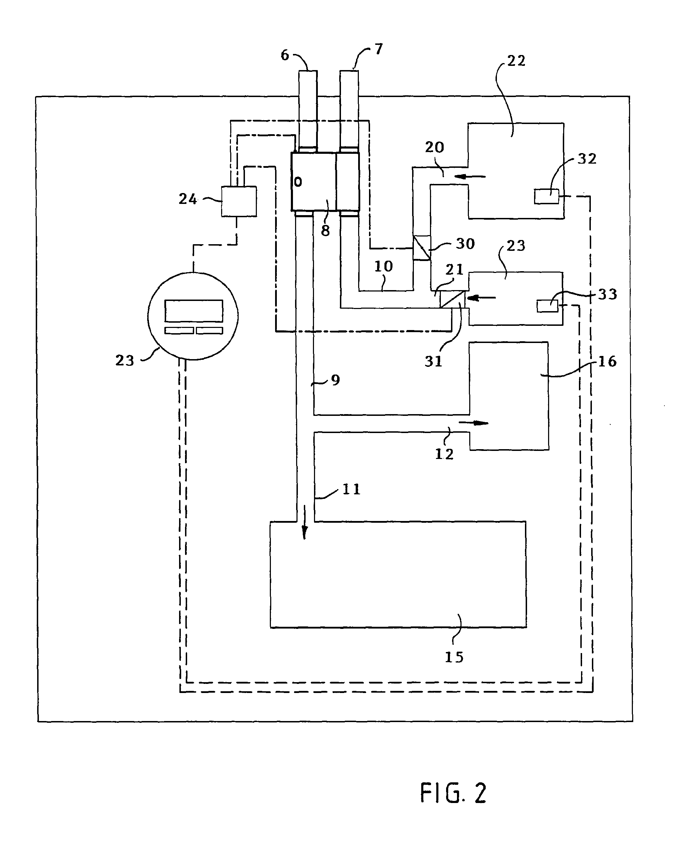

In figure 2 the ventilation device of figure 1 is shown, however, in this situation the valves have not been arranged in the inner inlet but in the inner outlets 20 and 21, in which valves 30 and 31 have been arranged, respectively. Moreover, the CO₂ sensors have been arranged in these rooms, referred to by numbers 32 and 33, respectively.

However, it is not absolutely necessary that the sensors have been arranged in the same rooms as the inlets or outlets with valves.

In this case the requesting means may receive a request for more air from the two rooms 22 and 23. In response to a request for more fresh air in this case the valves 30 and 31 will be operated such that the quantity of flow through in these two rooms either increases or decreases.

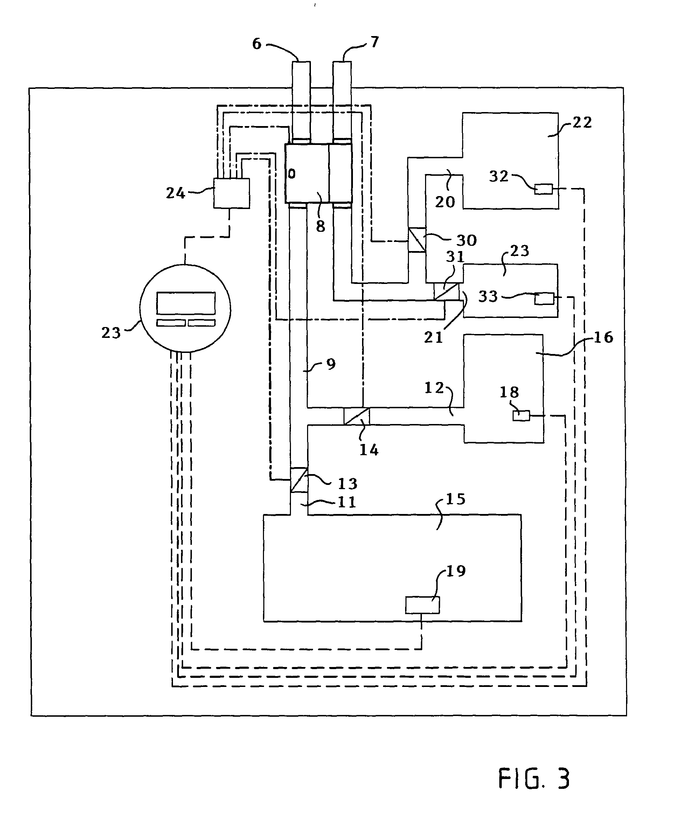

In figure 3 the situation of the figures 1 and 2 has been combined, wherein in both the inner inlets and the inner outlets valves have been arranged, and all rooms have been provided with CO₂ sensors. As a result an ever finer tuning of the ventilation through the various zones is possible.

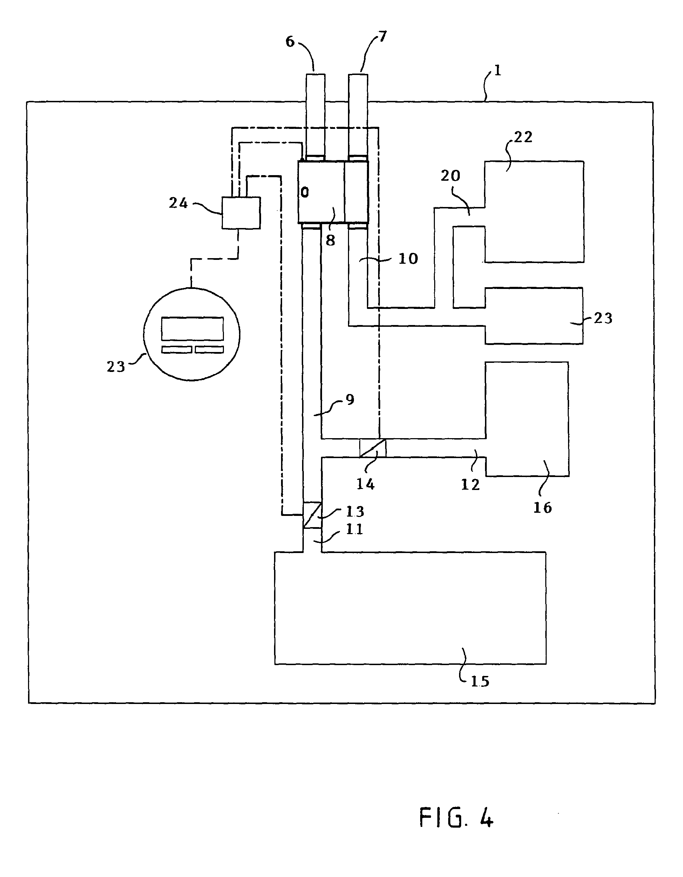

Figure 4 shows the ventilation device according to figure 1, wherein this time the requesting device or the requesting means 23 is only controlled by means of a time switch, with which time slots it can be indicated when in certain rooms or zones additional air is necessary.

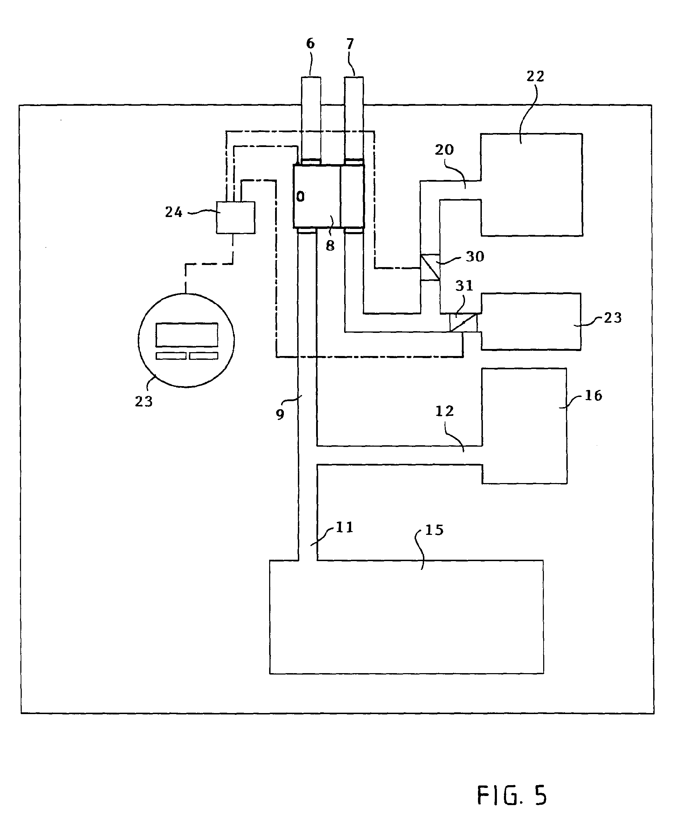

Figure 5 shows the set-up of figure 1 again, wherein this time the valves have been arranged in the inlets like in figure 2, wherein however again no CO₂ sensors have been arranged but control again, takes place by means of a time switch like in figure 4.

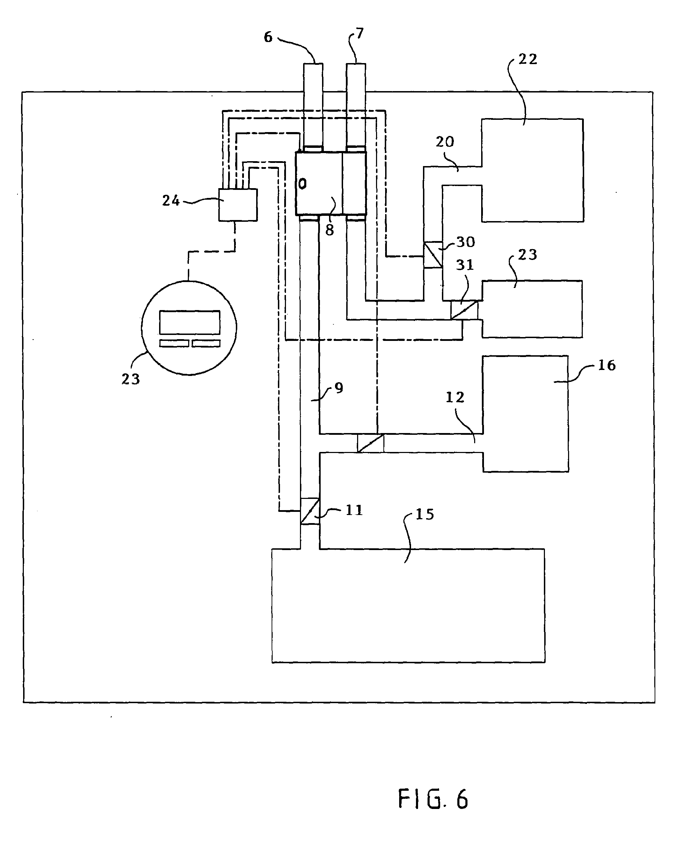

Figure 6 also shows the set-up of figure 1, wherein this time valves have been arranged in all inlets and outlets. Sending the request here again takes place by means of a programmable time switch, again in the basis like in figure 4.

Below several possible examples of control methods are explained.

For the control a number of options are available:
- "simple" control:
   - ventilation on the basis of time (switch);
   - ventilation using constant flow on the basis of CO₂-content;
- "extensive" control:
   - ventilation using constant flow and constant pressure on the basis of CO₂-content.

### Ventilation on the basis of time (switch)

By programming a timer it is possible to direct fresh outside air, by means of controlling the valves, to the wanted rooms. In a simplest embodiment the valves only know the open and closed position. A further development are valves that are able to provide an adjustable flow through. The degree of ventilation is determined by the position of a position switch that is set by the end user. A valve in closed position has a ventilation air passage of for instance 20% of the set flow rate, a valve in open position has a 100% ventilation air passage.

In this way fresh outside air can be passed to the bedrooms at certain times in the evening and during the day fresh outside air can be passed to the living room. In this way, ventilation takes place in those locations where people are present.

### Ventilation using constant flow on the basis of the CO₂-content

By measuring the CO₂-content in the various rooms it is determined to which room the most fresh outside air should be supplied and it is determined whether it is necessary to increase the ventilation position. By means of controlling the valves to open or close, the fresh outside air can be directed to the room in question. In a simple embodiment the valves only know the open and closed position. A further refining can be adjustable valves which can be (substantially) continuously variably controlled. A valve in closed position has a ventilation air passage of for instance 20% of the set flow rate, a valve in open position has a 100% ventilation air passage.

The degree of ventilation depends on the CO₂-content in the various rooms. In this automated ventilation control whether or not to include ventilation position 3 in the process can be opted for. Said option is created in connection with a noise level that might be too high.

Three control strategies can be chosen from:
- comfort program wherein switch point 1 is at 800 ppm and switch point 2 at 1000 ppm;
- ECO-program wherein switch point 1 is at 1000 ppm and switch point 2 at 1200 ppm (factory setting);
- An own program wherein both switch point 1 and 2 can be chosen by oneself.

The tables below show both control strategies.

| | |
|---|---|
| '-' | CO₂-content below switch point 1 |
| '+' | CO₂-content above switch point 1 |
| ' + +' | CO₂- content above switch point 2 |

Ventilation position 3 has not been included in the process:

| CO₂ sensor 1 | CO₂ sensor 2 | Valve 1 | Valve 2 | Ventilation position |
|---|---|---|---|---|
| - | - | open | open | 1 |
| + | - | open | closed | 1 |
| - | + | closed | open | 1 |
| + | + | open | open | 2 |
| + + | - | open | closed | 2 |
| - | + + | closed | open | 2 |
| + + | + | open | open | 2 |
| + | + + | open | open | 2 |
| + + | + + | open | open | 2 |

Ventilation position 3 has been included in the process:

| CO₂ sensor 1 | CO₂ sensor 2 | Valve 1 | Valve 2 | Ventilation position |
|---|---|---|---|---|
| - | - | open | open | 1 |
| + | - | open | closed | 1 |
| - | + | closed | open | 1 |
| + | + | open | open | 2 |
| + + | - | open | closed | 2 |
| - | + + | closed | open | 2 |
| + + | + | open | open | 3 |
| + | + + | open | open | 3 |
| + + | + + | open | open | 3 |

In case of a continuously variable fan the number of revolutions may be a function of measured values of the sensors, possibly in combination with the time. In that way the number of revolutions can be kept low in a certain range, so that just sufficient ventilation takes place.

### Ventilation using constant flow and constant pressure on the basis of the CO₂-content

The operation of this control principle largely corresponds with the situation described above. The control has been extended with control on pressure and the "continuously variable" control of the valves.

When perceiving too high a CO₂-content in one of the rooms, it will have to be ensured that more fresh outside air will be allowed into this room. The quantity of fresh outside air in turn depends on the level of the CO₂-content. The valves that have been connected to other rooms, where there is a low CO₂-content, will now for instance be closed stepwise. This means that more fresh outside air will go to the room having the CO₂-content that is too high.

It may well occur that by controlling the valves to close and increasing the ventilation position, the resistance in the system becomes too high and the fans start rotating at a high number of revolutions. The control therefore is also equipped with a constant pressure control that will ensure that the resistance in the system will not exceed a certain threshold. The control will then play with the valve positions (open and closed to what extent) and the air displacement, that means the overall flow rate.

It will be clear that the above description is included to illustrate the operation of preferred embodiments of the invention and not to limit the scope of the invention. Starting from the above explanation many variations that fall within the spirit and scope of the present invention will be evident to an expert.

## Claims

1. Ventilation device for balanced ventilation of a building, such as a residence, divided into at least two zones each of which zone has at least one outlet or inlet, of which at least one is provided with flow through adjustment means, for instance a valve, wherein the ventilation device is further provided with a control device that is operationally connected to the flow through adjustment means, and requesting means, for instance a time switch or sensors operationally connected to the control device making a request to the control device for air in one of the zones, wherein the requesting means make a request to the control device for additional air in a zone, and the control device in response to the request activates one or more of the flow through adjustment means to adjust the ventilation flows in the zones in order to meet the request.

2. Ventilation device according to claim 1, wherein in each zone at least one inlet or outlet is provided with flow through adjustment means.

3. Ventilation device according to claim 1 or 2, wherein in each zone an inlet and an outlet has been arranged.

4. Ventilation device according to any one of the preceding claims, wherein each inlet is provided with flow through adjustment means.

5. Ventilation device according to any one of the preceding claims, wherein each outlet is provided with flow through adjustment means.

6. Ventilation device according to any one of the preceding claims, wherein a zone comprises several rooms.

7. Ventilation device according to any one of the preceding claims, wherein each zone comprises a room.

8. Ventilation device according to any one of the preceding claims, wherein each zone is in air flow connection with the other.

9. Ventilation device according to any one of the preceding claims, wherein the properties of the air flow connection between the zones has been entered into the control device.

10. Ventilation device according to any one of the preceding claims, wherein the control device comprises setting parameters, wherein the properties of the air flow connection between the zones can be set in the control device.

11. Ventilation device for balanced ventilation of at least two zones in a building, particularly a residence, comprising:
- an outside air inlet for outside air from outside of the building, in mounted condition;
- an outer outlet which debouches outside of the building, in mounted condition;
- at least one inner outlet for having the outside air that has been drawn in via the outer inlet flow out in the building;
- at least one inner inlet for letting in inside air from inside the building, and which is in connection with the outer outlet for via said outer outlet discharging said inside air outside of the building;
- air movement means for sucking in outside air through the outside air inlet and discharging said outside air in the building through the inner outlet and sucking in inside air through the inner inlet and discharging said inside air outside of the building via the outer outlet, wherein the air movement means have been equipped for realising an inside air flow rate and an outside air flow rate that are substantially the same;
- flow through adjustment means for adjusting the flow through through an inner inlet or inner outlet;
- control means, operationally connected to the flow through adjustment means, and
- requesting means, operationally connected to the control means for making a request for additional outside air in at least one of the zones,
wherein the control means, by means of setting the flow through adjustment means, adjust the ventilation in the various zones in order to meet the request as much as possible.

12. Ventilation device according to any one of the preceding claims, wherein the requesting means comprise sensors for measuring the CO₂-content in at least one of the rooms and for giving a signal to the control device, which signal is indicative for the measured value of the CO₂-content.

13. Ventilation device according to claim 12, wherein the control device has been provided with a comparing device for comparing the measured value with at least one switch point, wherein the control device adjusts the degree of ventilation, also called the ventilation position, depending on the measured value being larger or smaller than the switch point.

14. Ventilation device according to claim 12 or 13, wherein the control device has been provided with a comparing device for comparing the measured value with at least two switch points, wherein the control device adjusts the degree of ventilation, also called the ventilation position, depending on the measured value being larger or smaller than the switch point.

15. Ventilation device according to claim 12, 13 or 14, wherein the switch points can be set.

16. Ventilation device according to claim 14 or 14 and 15, wherein the control device is adapted for at choice performing one of the following three pre-set control strategies:
a) a first switch point is approximately 800 ppm and a second switch point is approximately 1000 ppm;
b) a first switch point is approximately 1000 ppm and a second switch point is approximately 1200 ppm;
c) the switch points can be set by the user.

17. Method for ventilating a building, particularly a residence, by means of a ventilation device for balanced ventilation, wherein the building is divided into at least two zones each of which zone has at least one outlet or inlet, of which at least one is provided with flow through adjustment means, for instance a valve, and the ventilation device is furthermore provided with a control device that is operationally connected to the flow through adjustment means, and requesting means, for instance a time switch or sensors, operationally connected to the control device for making a request to the control device for air in one of the zones, wherein the requesting means make a request to the control device for additional air in a zone, and the control device in response to the request activates one or more of the flow through adjustment means to adjust the ventilation flows in the zones in order to meet the request.

18. Control, suitable and intended for a ventilation device according to any one of the preceding claims or suitable and intended for a method according to any one of the preceding claims.

19. Device comprising one or more of the characterising measures described in the description and/or shown in the drawings.

20. Method comprising one or more of the characterising measures described in the description and/or shown in the drawings.
